(19) Europäisches Patentamt
European Patent Office
Office européen des brevets

(11) EP 4 773 419 A1

(12) **EUROPEAN PATENT APPLICATION**
published in accordance with Art. 153(4) EPC

(43) Date of publication:
08.07.2026 Bulletin 2026/28

(21) Application number: 25824411.0

(22) Date of filing: 19.02.2025

(51) International Patent Classification (IPC):
*H01M 50/553* (2021.01)

(52) Cooperative Patent Classification (CPC):
Y02E 60/10

(86) International application number:
PCT/CN2025/078028

(87) International publication number:
WO 2026/001016 (02.01.2026 Gazette 2026/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.06.2024 CN 202410820196

(71) Applicant: Eve Power Co., Ltd.
Jingmen, Hubei 448000 (CN)

(72) Inventors:
• SONG, Shuaishuai
Jingmen, Hubei 448000 (CN)
• CHEN, Liquan
Jingmen, Hubei 448000 (CN)
• YUAN, Dingding
Jingmen, Hubei 448000 (CN)
• HE, Wei
Jingmen, Hubei 448000 (CN)

(74) Representative: Zhu, Puxing
Mars Universe IP
c/o Spaces
Mühldorfstraße 8
81671 München (DE)

(54) **BATTERY, BATTERY MODULE, AND ELECTRIC APPARATUS**

(57) A battery, a battery module, and an electrical device are provided by the invention. The battery includes a casing, a cover plate, an electrode assembly, a terminal, and tabs. The cover plate covers the casing to define an accommodating cavity. The electrode assembly is disposed inside the accommodating cavity. The terminal is disposed on the cover plate and located on a side of the cover plate away from the accommodating cavity. The terminal is provided with a mounting groove communicated with the accommodating cavity. Each of the tabs is disposed in the mounting groove and is electrically connected to an inner wall of the mounting groove. The electrode assembly extends to a groove opening of the mounting groove and is connected to the tabs.

FIG. 1

**Description**

This invention claims priority to and the benefit of Chinese Patent Application No. 202410820196.2, filed with China Patent Office on June 24, 2024. The disclosure of which is incorporated herein by reference in its entirety.

TECHNICAL FIELD

The invention relates to the field of battery technologies, and in particular, to a battery, a battery module, and an electrical device.

BACKGROUND

In related art, a battery includes an outer casing, external components, and internal components. The outer casing includes an accommodating cavity. The internal components are disposed inside the accommodating cavity. The external components are disposed on the outer casing. The internal components mainly include an electrode assembly, tabs, and an insulating adhesive tape. The external components mainly include terminals and explosion-proof valves. The tabs are connected to the electrode assembly, and are connected to the terminals through adapters for output and input transmission of current.

SUMMARY

In the related art, a utilization rate of an internal space of the battery is relatively low, resulting in limited improvement of an energy density of the battery.

In a first aspect, the invention provides a battery. The battery includes a casing, a cover plate, an electrode assembly, a terminal, and tabs. The cover plate covers the casing to define an accommodating cavity. The electrode assembly is disposed inside the accommodating cavity. The terminal is disposed on the cover plate and protrudes over a side of the cover plate away from the accommodating cavity. A side of the terminal close to the accommodating cavity is provided with a mounting groove. The mounting groove is communicated with the accommodating cavity. Each of the tabs is disposed in the mounting groove and is electrically connected to an inner wall of the mounting groove. The electrode assembly extends to a groove opening of the mounting groove and is connected to the tabs.

In a second aspect, the invention provides a battery module. The battery includes a plurality of batteries. The plurality of batteries are connected in series and/or in parallel. At least one of the batteries is the aforementioned battery.

In a third aspect, the invention provides an electrical device. The electrical device includes the aforementioned battery, and the battery supplies power to the electrical device. Alternatively, the electrical device includes the aforementioned battery module, and the battery module supplies power to the electrical device.

BENEFICIAL EFFECTS

In the invention, each of the tabs is disposed within the terminal, so that the tabs and the terminal share a height space, thereby facilitating a space originally occupied by the tabs to be used to provide the electrode assembly, and a vacant space around the tabs may also be filled up by the electrode assembly. In this way, the space utilization of the battery can be improved.

BRIEF DESCRIPTION OF THE DRAWINGS

FIG. 1 is a schematic view of an internal structure of a battery according to the embodiments of the invention.

FIG. 2 is an enlarged view of a portion A in FIG. 1.

FIG. 3 is a schematic view of a structure where a tab is stacked and bent according to the embodiments of the invention.

FIG. 4 is a schematic view of a structure where another tab is stacked and bent according to the embodiments of the invention.

FIG. 5 is a schematic view of a structure where yet another tab is stacked and bent according to the embodiments of the invention.

FIG. 6 is an enlarged view of a portion B in FIG. 4.

FIG. 7 is a schematic view of an internal structure of another battery according to the embodiments of the invention.

FIG. 8 is an enlarged view of a portion C in FIG. 7.

FIG. 9 is a schematic view of dimension labeling at a terminal according to the embodiments of the invention.

FIG. 10 is a schematic view of an internal structure of yet another battery according to the embodiments of the invention.

FIG. 11 is a schematic view of a structure of a battery according to the embodiments of the invention.

FIG. 12 is a schematic view of a structure of an electrical device according to the embodiments of the invention.

Description of reference numbers:

001, battery;

011, casing; 111, accommodating cavity; 012, cover plate; 121, through-hole; 013, electrode assembly; 014, terminal; 141, positive terminal; 142, negative terminal; 143, mounting groove; 1431, first groove wall; 1432, inner wall; 1433, groove opening; 015, tab; 151, positive tab; 152, negative tab; 153, tab group; 1531, bending portion; 1533, planar portion; 1534, first surface; 1535, tab unit; 1536, end; 154, cutting opening; 016, insulation member;

002, battery module; 021, mounting cavity; 022, box body; 023, box cover;

003, electrical device; 031, motor; 032, controller.

DETAILED DESCRIPTION

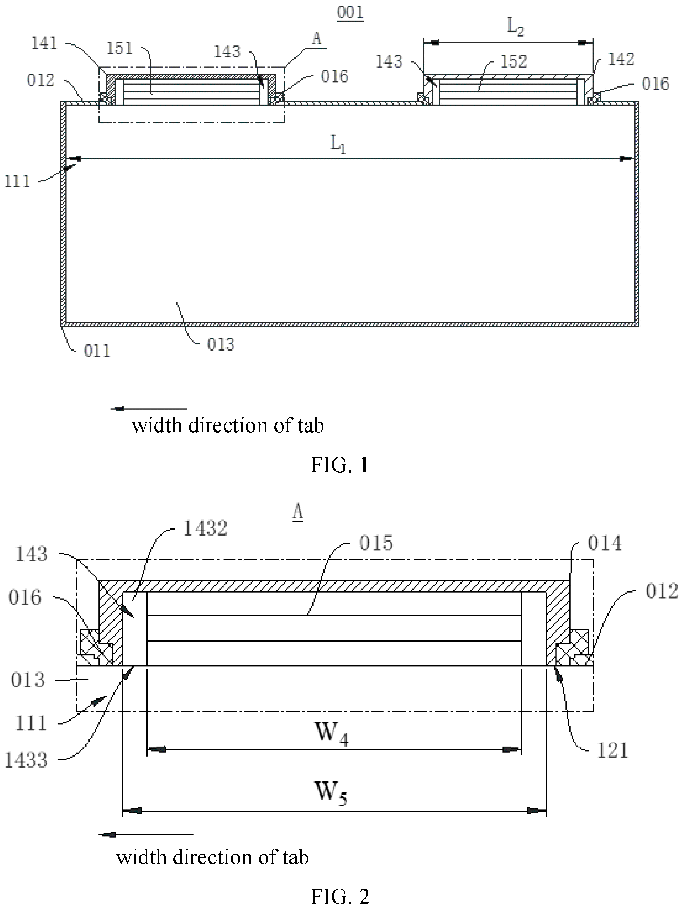

Before a battery, a battery module, and an electrical device provided by the invention are described, related technologies of the invention are described in detail.
In the art, batteries mainly include square-casing batteries and cylindrical batteries. The square-casing battery includes an outer casing, an electrode assembly, tabs, and an electrolyte. The electrode assembly, the tabs, and the electrolyte are disposed in the outer casing. The outer casing includes a casing provided with an opening and a cover plate closing the opening of the outer casing. The cover plate covers the outer casing to define an accommodating cavity for storing internal components of the battery. The electrolyte is mainly located at a bottom of the accommodating cavity and wets electrode plates through capillary action. One or more terminals are disposed on the cover plate. The electrode assembly includes a positive plate, a separator, and a negative plate stacked in sequence. Alternatively, the electrode assembly includes a positive plate, a separator, and a negative plate sequentially stacked and wound. The tabs are classified as a positive tab and a negative tab. The positive tab is connected to the positive plate and connected to a positive terminal through a positive current collector. The negative tab is connected to the negative plate and connected to a negative terminal through a negative current collector. In the square-casing battery, the tabs are mainly disposed on an end surface of the electrode assembly facing the cover plate. In this structure, a relatively large vacant space is provided between an inner cavity wall of the outer casing and the tabs at least in a width direction of the tabs. However, the vacant space is not provided with components or filled with functional substances. As such, a space utilization of the battery is relatively lower due to the existence of the vacant space, resulting in low energy density of the battery. The width direction of the tab is an extension direction of a connection portion between the tab and the electrode plate.
Based on this, the embodiments of the invention provide a battery, a battery module, and an electrical device, so as to solve a problem of low space utilization of the battery. In the invention, the battery, the battery module, and the electrical device provided by the embodiments of the invention are described in detail in the following embodiments with reference to FIGs. 1 to 12.
Referring to FIG. 1, FIG. 1 is a schematic view of an internal structure of a battery 001 according to the embodiments of the invention. The embodiments of the invention provide a battery 001. The battery 001 includes a casing 011, a cover plate 012, an electrode assembly 013, one or more terminals 014, and tabs 015. The cover plate 012 covers the casing 011 to define an accommodating cavity 111. The electrode assembly 013 is disposed inside the accommodating cavity 111. The terminal 014 is disposed on the cover plate 012 and protrudes over a side of the cover plate 012 away from the accommodating cavity 111. A side of the terminal 014 close to the accommodating cavity 111 is provided with a mounting groove 143. The mounting groove 143 is communicated with the accommodating cavity 111. Each tab 015 is disposed in the mounting groove 143 and is electrically connected to an inner wall 1432 of the mounting groove 143. The electrode assembly 013 extends to a groove opening 1433 of the mounting groove 143 and is connected to the tab 015. As shown in FIG. 2, FIG. 2 is an enlarged view of part A in FIG. 1.

Specifically, the tab 015 is welded to the terminal 014.

The battery 001 is one of following batteries 001: a square-casing battery, a cylindrical battery, a prismatic battery, a special-shaped casing battery, and a button battery.

It may be understood that the electrode assembly 013 includes a positive plate, a separator, and a negative plate stacked in sequence. Alternatively, the electrode assembly 013 includes a positive plate, a separator, and a negative plate sequentially stacked and wound. The positive plate includes a current collector and a positive active material layer disposed on the current collector. The negative plate includes a current collector and a negative active material layer disposed on the current collector. The tab 015 may be integrally disposed as at least a partial region of the current collector uncoated with the active material layer. In other embodiments, the tab 015 may be separately welded onto the current collector.

Additionally, the battery 001 may include one terminal 014. In this case, one tab 015 having one polarity is in contact with the terminal 014 to achieve current transmission of one polarity, and another tab 015 having another polarity may be directly in contact with the cover plate 012 or the casing 011 to achieve current transmission of another polarity. Furthermore, the terminal 014 should be insulated and isolated from the cover plate 012. In other embodiments, the battery 001 may also include two terminals 014, i.e. a positive terminal 141 and a negative terminal 142. A structure of the positive terminal 141 is consistent with a structure of the negative terminal 142. The positive tab 151 is located within the positive terminal 141, and the negative tab 152 is located within the negative terminal 142. Furthermore, at least one of the positive terminal 141 and the negative terminal 142 is insulated and isolated from the cover plate 012.

In this embodiment, each of the tabs 015 is disposed within the terminal 014, so that the tabs 015 and the terminal 014 share a height space, thereby facilitating a space originally occupied by the tabs 015 to be used to provide the electrode assembly 013, and a vacant space around the tabs 015 may also be filled up by the electrode assembly 013. In this way, on one hand, the space utilization of the battery 001 can be improved. On the other hand, a size of the electrode assembly 013 can be increased, thereby improving the energy density of the battery 001.

Furthermore, since the size of the electrode assembly 013 is increased, the same current can be distributed on a larger area, so that the current density per unit area or per unit length can be reduced to reduce the migration resistance of electrons, thereby reducing the direct current impedance (DCR) during charging and discharging of the battery 001. In addition, a larger electrode assembly 013 can provide more active material regions infiltrated by the electrolyte, thereby helping to improve a migration speed of lithium ions, and reducing the DCR during charging and discharging of the battery 001.

Since the DCR of the battery 001 is reduced, temperature rise of the battery 001 during the charging and discharging process can be reduced. Furthermore, since the size of the electrode assembly 013 is increased, the electrode assembly 013 inside the battery 001 can have a larger heat dissipation area, thereby helping to improve the heat dissipation efficiency, thereby reducing the temperature rise of the battery 001 during the charging and discharging process.

In addition, the tab 015 is disposed inside the terminal 014, so that a relative area between the terminal 014 and the tab 015 can be increased, and the terminal 014 can have portions opposite to the tab 015 in a plurality of directions. In this way, the terminal 014 may be in contact with the tab 015 through a plurality of portions to achieve conduction, so as to improve reliability of a conductive connection between the terminal 014 and the tab 015, and an adapter used for connecting the tab 015 and the terminal 014 may be omitted, thereby reducing manufacturing costs of the battery 001, and improving the manufacturing efficiency of the battery 001.

Optionally, the electrode assembly 013 is in insulating contact with the cover plate. In this way, the electrode assembly 013 can fill the accommodating cavity 111 of the battery 001 to increase the size of the electrode assembly 013 and improve the utilization rate of an internal space of the battery 001.

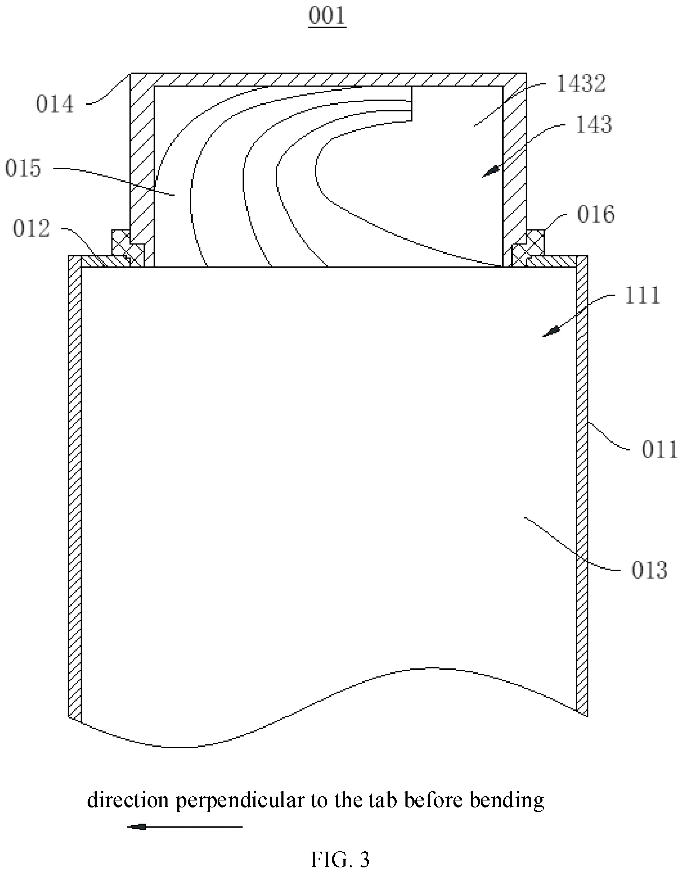

Referring to FIG. 3, FIG. 3 is a schematic view of a structure where the tab 015 is stacked and bent according to the embodiments of the invention. In an embodiment, the tab 015 includes a plurality of layers. The plurality of layers of the tab 015 are stacked and bent in the mounting groove 143.

It may be understood that, after the plurality of layers of the tab 015 are stacked, the tab 015 may be bent once and disposed in the mounting groove 143, as shown in FIG. 3. Alternatively, the tab 015 may be bent and disposed in the mounting groove 143 for a plurality of times.

In this embodiment, the plurality of layers of the tab 015 is bent and stacked, a height occupied by the tab 015 can be reduced, so that a height dimension of the battery 001 as a whole can be controlled, which is conducive to improving the energy density of the battery 001.

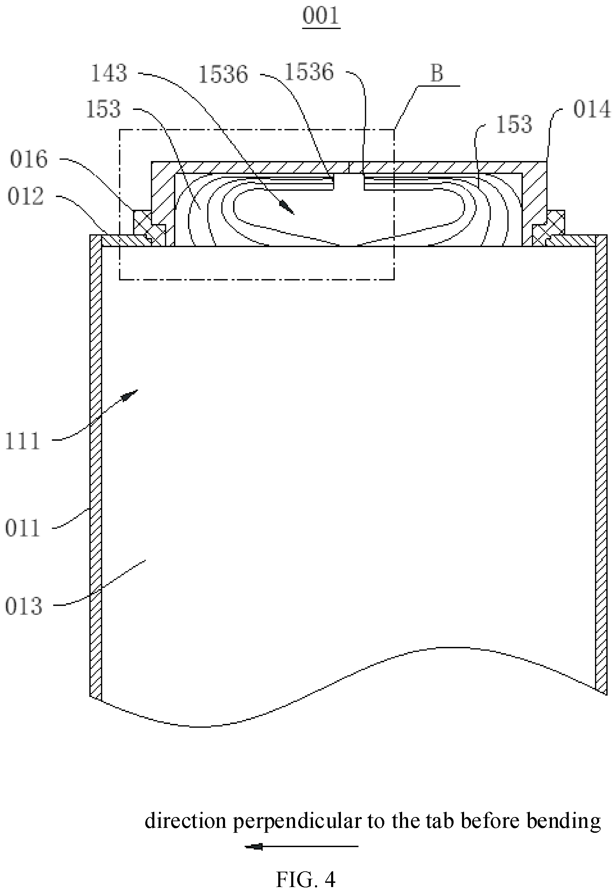

Referring to FIG. 4, FIG. 4 is a schematic view of a structure where another tab 015 is stacked and bent according to the embodiments of the invention. In an embodiment, along a stacking direction of the tab 015, the plurality of layers of the tab 015 are divided into two tab groups 153. The two tab groups 153 are respectively stacked and bent in the mounting groove 143.

The stacking direction is a stacking direction before the tab 015 is bent.

Specifically, bending directions of the two tab groups 153 may be opposite to each other, or the bending directions of the two tab groups 153 may be consistent. In a case where the bending directions of the two tab groups 153 are opposite to each other, the two tab groups 153 may be bent toward each other, that is, concave surfaces formed by the bending of the two tab groups 153 are opposite to each other. Alternatively, the two tab groups 153 may be bent away from each other, that is, the concave surfaces formed by the bending of the two tab groups 153 are opposite to each other.

It may be understood that each of the tab groups 153 includes the plurality of layers of the tab 015 sequentially stacked.

In addition, the number of layers of the tabs 015 of the two tab groups 153 may be the same or different. Optionally, structures of the two tab groups 153 are symmetrical to each other, so that a connection structure between the terminal 014 and the tabs 015 is a symmetrical structure, so that the terminal 014 and the electrode assembly 013 can be symmetrically stressed to alleviate a stressed state of the terminal 014 and the electrode assembly 013.

In this embodiment, the plurality of layers of the tab 015 are divided into the two tab groups 153, so that the height dimension of the tab 015 after bent can be reduced, and the height occupied by the tab 015 can be reduced. This is conducive to controlling the height dimension of the battery 001 as a whole and improving the energy density of the battery 001.

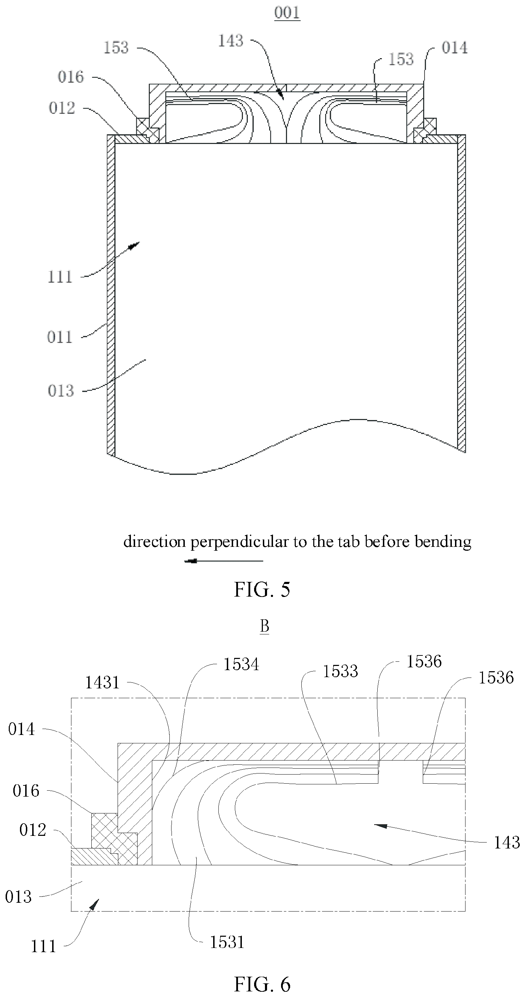

The two groups of the tab 015 may be bent toward each other to form a structure shown in FIG. 4, or may be bent away from each other to form a structure shown in FIG. 5, and FIG. 5 is a schematic view of a structure where yet another tab 015 is stacked and bent according to the embodiments of the invention.

Referring to FIG. 6, FIG. 6 is an enlarged view of B in FIG. 4. In an embodiment, each tab group 153 includes a bending portion 1531 and a planar portion 1533 connected in sequence. One end of the bending portion 1531 is connected to the electrode assembly 013, and another end of the bending portion 1531 is connected to the planar portion 1533. The planar portion 1533 is electrically connected to a groove bottom of the mounting groove 143. Bending portions 1531 of the two tab groups 153 are bent toward each other.

Specifically, as shown in FIG. 4, each tab group 153 extends from one end close to the electrode assembly 013 to another end. First, each tab group 153 extends toward a groove wall of the mounting groove 143, that is, extends away from another tab group 153, and then gradually bending toward another tab group 153. In this way, the bending portions 1531 of the two tab groups 153 are bent toward each other. That is, along the stacking direction of the tab 015, inner concave surfaces of the two tab groups 153 are arranged opposite to each other.

Exemplarily, a side of the planar portion 1533 away from the electrode assembly 013 is attached to the groove bottom of the mounting groove 143, so as to increase a contact surface between the planar portion 1533 and the mounting groove 143, thereby improving the reliability of current transmission.

In this embodiment, through the above-described arrangement, the two tab groups 153 bent toward each other. On one hand, each tab group 153 can have a relatively large surface in contact with the inner wall 1432 of the mounting groove 143, so that each tab group 153 has a larger current transmission surface with the terminal 014, thereby improving the reliability of current transmission between the tab groups 153 and the terminal 014. On the other hand, in order to improve the reliability of current transmission between the tab groups 153 and the terminal 014, the tab groups 153 need to be pressed in a direction perpendicular to the cover plate, so as to increase a abutting force between the tab groups 153 and the groove bottom of the mounting groove 143, and an abutting force between opposite sides of the tab groups 153 and a pair of opposite inner walls 1432 of the mounting groove 143. In this case, the two tab groups 153 are bent toward each other, so that a spacing is provided between the two tab groups 153, thereby reducing a squeezing force of the two tab groups 153 on each other and alleviating the stressed state of the tab groups 153.

Referring to FIG. 4 or FIG. 6, in an embodiment, ends 1536 of the planar portions 1533 of the two tab groups 153 are opposite to each other and spaced apart from each other.

Exemplarily, the spacing ranges from 0.5 mm to 4 mm. It can be understood that the spacing includes, but is not limited to, 0.5 mm, 0.8 mm, 1 mm, 1.2 mm, 1.5 mm, 1.8 mm, 2 mm, 2.5 mm, 3 mm, 3.5 mm, 3.6 mm, 3.8 mm, 3.9 mm, and 4 mm.

In this embodiment, through the above-described arrangement, on one hand, the tab 015 can be mounted in the mounting groove 143, so that when the ends 1536 of the planar portions 1533 are close to each other due to compression of the tab groups 153, a buffer space is provided for the two tab groups 153 to avoid mutual interference between the two groups of the tab 015. On the other hand, when the tabs 015 are thermally expanded, a thermal expansion space is provided for the two groups of the tab 015 to avoid mutual interference between the two groups of the tab 015.

Referring to FIG. 4 or FIG. 6, in an embodiment, along an arrangement direction of the two tab groups 153, the mounting groove 143 has a pair of first groove walls 1431 arranged opposite to each other. Sides of the two tab groups 153 away from each other are first surfaces 1534. Each first surface 1534 is at least partially attached to adjacent one of the first groove walls 1431.

In this embodiment, through the above-described arrangement, an area of a contact surface between the tabs 015 and the inner wall 1432 of the mounting groove 143 can be increased, thereby improving the reliability of the conductive connection between the tab 015 and the terminal 014, and further improving the reliability of the battery 001.

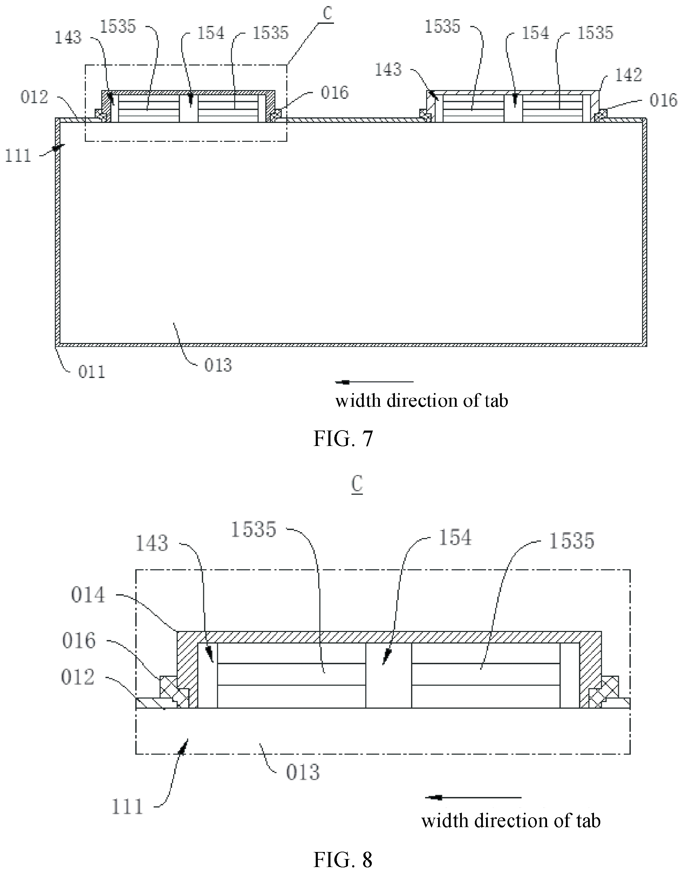

Referring to FIG. 7 and FIG. 8, FIG. 7 is a schematic view of an internal structure of another battery 001 according to the embodiments of the invention, and FIG. 8 is an enlarged view of a portion C in FIG. 7. In an embodiment, along the width direction of the tab 015, the tab 015 is provided with a plurality of cutting openings 154. The plurality of cutting openings 154 on two adjacent layers of the tab 015 are in one-to-one correspondence. Each of the two tab groups 153 is divided into a plurality of tab 015 units arranged at intervals by the plurality of cutting openings 154.

In this embodiment, by providing the cutting openings 154, each layer of the tab 015 can be formed by a plurality of sub-tab groups 153 with smaller sizes. In this way, the tab 015 can be prevented from being folded at will during a process of stacking the electrode plates, and the processability of the tab 015 is improved, which is conducive to conducting smooth assembly of the battery 001.

In an embodiment, the plurality of layers of the tab 015 stacked and bent along the thickness direction of the tab 015 are in interference fit with the mounting groove 143.

It may be understood that the tab 015 is a metal layer, and has thin thicknesses and relatively high flexibility. As such, during assembly, the tab 015 is in an interference fit in the thickness direction of the tab 015, and the tab 015 may be squeezed to enable the tab 015 to smoothly enter the mounting groove 143, which is conducive to improving the smoothness of assembly between the tab 015 and the terminal 014.

Based on this, in this embodiment, through the above-described arrangement, the area of the contact surface between the tab 015 and the inner wall 1432 of the mounting groove 143 and a contact force can be increased, thereby improving the reliability of the electrical connection between the tab 015 and the terminal 014.

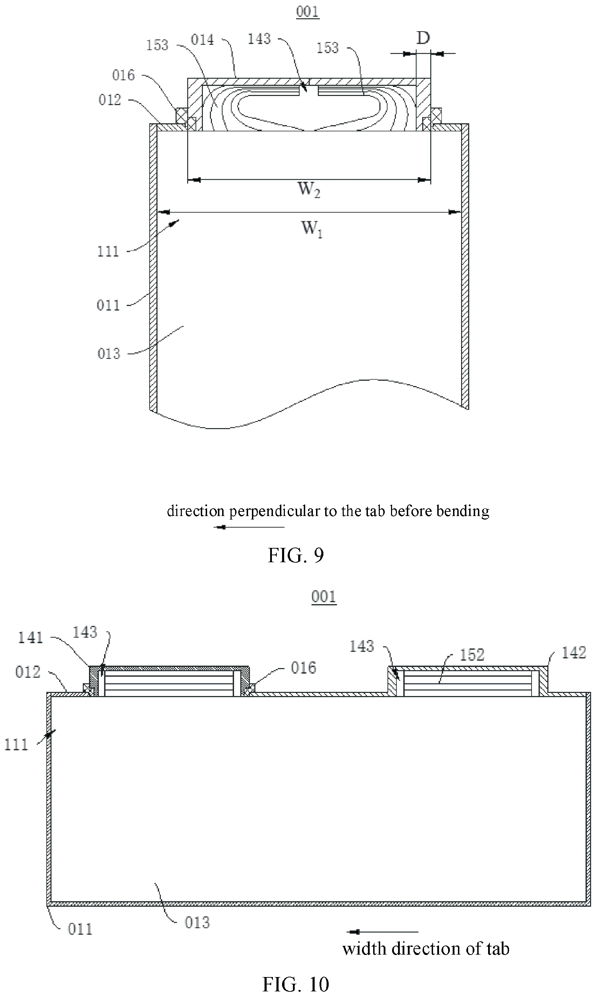

Referring to FIG. 9, FIG. 9 is a schematic view of dimension labeling at a terminal 014 according to the embodiments of the invention. In an embodiment, the battery 001 is a square-casing battery. The cover plate has a width dimension W1 along a width direction of the cover plate 012. The terminal 014 has a width dimension W2 satisfying: 50% W1≤W2≤W1-2 mm.

It can be understood that the maximum value of the width dimension W2 of the terminal 014 is W1-2 mm, and the minimum value of the width dimension W2 is 50%W1. As such, the width dimension W2 of the terminal 014 may be, but is not limited to, 50%W1, 52%W1, 55%W1, 58%W1, 60%W1, 62%W1, 65%W1, 66%W1, 68%W1, 70%W1, 72%W1, 75% W1, 78%W1, 80%W1, W1-8 mm, W1-7 mm, W1-6 mm, W1-5 mm, W1-4 mm, W1-3.5 mm, W1-3.2 mm, W1-3 mm, W1-2.8 mm, W1-2.6 mm, W1-2.5 mm, and W1-2 mm.

In addition, the cover plate 012 is a plate-shaped structure and has a thickness dimension in an axial direction of the terminal 014. In a plane perpendicular to the axial direction of the terminal 014, longer edges are long edges, and shorter edges are wide edges. A straight line where the shorter edge is located is the width direction of the cover plate 012.

In this embodiment, through the above-described arrangement, on one hand, a size of the terminal 014 can be prevented from being too small, thereby improving reliability of a connection between the terminal 014 and a busbar. On the other hand, the size of the terminal 014 can be prevented from being too large to affect a connection between the terminal 014 and an end cover.

In other embodiments, in a case where the terminal 014 and the cover plate 012 are integrally formed, the maximum value of the width dimension W2 of the terminal 014 may be consistent with the width dimension W1 of the cover plate.

Referring to FIG. 9, in an embodiment, the battery 001 is a square-casing battery. Along the width direction of the cover plate 012, the inner wall 1432 of the mounting groove 143 has a thickness dimension D, satisfying: 0.5 mm≤D≤4 mm.

It can be understood that the thickness dimension D of a portion of the terminal 014 opposite to the mounting groove 143 includes, but is not limited to, 0.5 mm, 0.8 mm, 1 mm, 1.2 mm, 1.5 mm, 1.8 mm, 2 mm, 2.2 mm, 2.5 mm, 2.8 mm, 3 mm, 3.2 mm, 3.5 mm, 3.6 mm, 3.8 mm, and 4 mm.

In this embodiment, with the above-described limitations, on one hand, the thickness dimension of this portion can be prevented from being too small to cause a strength of the terminal 014 to be low, so that the strength of the terminal 014 can meet use requirements. On the other hand, the thickness dimension of this portion can be prevented from being too large to cause unnecessary increase in materials, so that material costs of the terminal 014 can be controlled.

In an embodiment, along the width direction of the tab 015, the tab 015 is in clearance fit with the mounting groove 143.

The width direction of the tab 015 is an extension direction of the connection portion 1531 between the tab 015 and the electrode plate.

It can be understood that in the width direction of the tab 015, since the tab 015 is connected to the electrode plate, a size of the tab 015 cannot be compressed. Based on this, the fit between the tab 015 and the mounting groove 143 in the width direction of the tab is set as a clearance fit, so that the smoothness of the tab 015 entering the mounting groove 143 can be improved, thereby improving the convenience of assembly.

Referring to FIG. 2, in an embodiment, along the width direction of the tab 015, the tab 015 has a width dimension W4, and the mounting groove 143 has a first dimension W5, satisfying: 50%W5≤W4≤W5-4 mm. In the width direction of the tab 015, spacings between two ends of the tab 015 and the adjacent inner wall 1432 of the mounting groove 143 is consistent.

It can be understood that the width dimension of the tab 015 is W5-4 mm, and the minimum value of the width dimension of the tab 015 is 50%W5. As such, the width dimension W4 of the terminal may be, but is not limited to, 50%W5, 52%W5, 55%W5, 58%W5, 60%W5, 62%W5, 65%W5, 66%W5, 68%W5, 70%W5, 72%W5, 75%W5, 78%W5, 80%W5, W5-8 mm, W5-7.5 mm, W5-7 mm, W5-6.5 mm, W5-6 mm, W5-5.8 mm, W5-5.5 mm, W5-5 mm, W5-4.8 mm, W5-4.5 mm, W5-4.2 mm, and W5-4 mm.

In this embodiment, through the above-described arrangement, a suitable fit gap is provided between the tab 015 and the mounting groove 143 in the width direction of the tab 015, which can not only ensure the smoothness of assembling the tab 015 to the mounting groove 143, but also make the tab 015 have a suitable area to ensure the current collecting capability.

Referring to FIG. 1, in an embodiment, the battery 001 is a square-casing battery. The cover plate has a length dimension L1 along the width direction of the tab 015. The terminal 014 has a second dimension L2, satisfying: 10%L1≤L2<50%L1.

It may be understood that in the case where the battery 001 includes two terminals 014 and the second dimension of each of the two terminals 014 is relatively large, an insulation plate may be disposed between the two terminals 014 to improve insulation between the two terminals 014.

Exemplarily, the second dimension L2 of the terminal 014 includes, but is not limited to, 10%L1, 12%L1, 14%L1, 15%L1, 16%L1, 18%L1, 20%L1, 22%L1, 25%L1, 28%L1, 30%L1, 33%L1, 35%L1, 36%L1, 40%L1, 42%L1, 44%L1, 45%L1, 46%L1, 47%L1, 48%L1, and 49%L1.

Specifically, L2 satisfies: 10%L1≤L2≤45%L1. Optionally, L2 satisfies: 30%L1≤L2≤40%L1.

In this embodiment, through the above-described limitations, on one hand, the size of the terminal 014 can be prevented from being too small, thereby improving the reliability of the connection between the terminal 014 and the busbar. On the other hand, the size of the terminal 014 can be prevented from being too large to affect arrangement of other components.

In an embodiment, the terminal 014 is a rectangular column, and an axis of the terminal 014 is perpendicular to the cover plate.

Compared with terminals 014 having other shapes, in this embodiment, through the above arrangement, the mounting groove 143 can have a larger size on the premise that the volume of the terminal 014 is fixed, so that more tabs 015 can be accommodated, thereby increasing the area of the tab 015 and improving the current collection capability.

In addition, by increasing the area of the tab 015, the DCR of the battery 001 can also be reduced and the temperature rise inside the battery 001 can be controlled.

Referring to FIG. 1 or FIG. 10, FIG. 10 is a schematic view of an internal structure of yet another battery 001 according to the embodiments of the invention. In an embodiment, the terminal 014 includes a positive terminal 141 and a negative terminal 142. At least one of the positive terminal 141 and the negative terminal 142 is insulated and isolated from the cover plate. The tabs 015 include a positive tab 151 and a negative tab 152. The positive tab 151 is disposed in the mounting groove 143 of the positive terminal 141. The negative tab 152 is disposed in the mounting groove 143 of the negative terminal 142.

It can be understood that one of the positive terminal 141 and the negative terminal 142 is insulated and isolated from the cover plate. As shown in FIG. 10, one of the terminals 014 is insulated and isolated from the cover plate 012 by an insulation member 016, and another of the terminals 014 may be welded to the cover plate 012, or may be integrally formed with the cover plate 012.

Alternatively, both the positive terminal 141 and the negative terminal 142 are insulated and isolated from the cover plate. As shown in FIG. 1, the two terminals 014 are insulated and isolated from the cover plate 012 by two insulation members 016, respectively.

Compared with the battery 001 provided with only one terminal 014, the two terminals 014 provided in this embodiment can improve the symmetry of the battery 001, so that the battery 001 can be stressed more symmetrically, thereby alleviating the stressed state of the battery 001.

Referring to FIG. 2, in an embodiment, the electrode assembly 013 is insulatively attached to or insulatively abutted against the cover plate 012.

The electrode assembly 013 is in insulated contact with the cover plate 012. This can be achieved by coating a contact surface between the cover plate 012 and the electrode assembly 013 with an insulation layer that does not react with the electrolyte, by providing an insulating pad on the contact surface of the cover plate 012 with the electrode assembly 013, or wrapping a surface of the electrode assembly 013 with an insulating film.

In this embodiment, through the above-described arrangement, the electrode assembly 013 may fill the accommodating cavity 111, so that the electrode assembly 013 may have a larger size, thereby improving the energy density of the battery 001.

Referring to FIG. 2, in an embodiment, the cover plate 012 is provided with a through-hole 121. One end of the through-hole 121 is communicated with the accommodating cavity 111. A part of the terminal 014 is inserted through the through-hole 121.

An end of the terminal 014 close to the electrode assembly 013 may be located in the through-hole 121, or may be flush with an end of the through-hole 121 close to the electrode assembly 013.

Additionally, the terminals 014 include a positive terminal 141 and a negative terminal 142. At least one of the terminals 014 is insulated from the cover plate 012.

In this embodiment, through the above-described arrangement, a fitting surface of the terminal 014 and the cover plate 012 can be increased, thereby increasing fitting stability of the terminal 014 and the cover plate 012, and further improving the structural reliability of the battery 001.

In other embodiments, the cover plate 012 is provided with a through-hole 121. One end of the through-hole 121 is communicated with the accommodating cavity 111. The terminal 014 is disposed on a side of the through-hole away from the accommodating cavity 111. Specifically, the terminal 014 may be directly welded to a surface of the cover plate 012 away from the accommodating cavity 111. Alternatively, the surface of the cover plate 012 away from the accommodating cavity 111 is provided with a boss, and the boss is inserted into the mounting groove 143. In this way, a welding stress on the through-hole during the welding process can be reduced, so that a weakened portion on the cover plate 012 around the through-hole can be protected, thereby improving a strength of the cover plate 012.

Referring to FIG. 2, in an embodiment, the battery 001 further includes an insulation member 016. The terminal 014 is insulated and isolated from the cover plate 012 by the insulation member 016. Specifically, the insulation member 016 is an annular structure and extends around a circumferential direction of the through-hole. An end of the insulation member 016 close to the accommodating cavity III is flush with a surface of the cover plate 012 close to the accommodating cavity 111. In this way, the insulation member 016 can be prevented from occupying the accommodating cavity 111, thereby increasing a space where the electrode assembly 013 can be arranged to improve the energy density of the battery 001.

In an embodiment, the cover plate 012 and the casing 011 are welded or integrally formed. During welding, the cover plate 012 is located in the opening of the casing 011, and the surface of the cover plate 012 away from the accommodating cavity 111 is flush with an end portion of the opening formed by the casing 011. In addition, the integral molding may be casting molding.

Referring to FIG. 4 or FIG. 5, in an embodiment, at least a part of the inner wall 1432 of the mounting groove 143 is attached to the tab 015. In this way, the contact surface between the mounting groove 143 and the tab 015 may be relatively large, thereby improving the reliability of the electrical transmission between the tab and the inner wall 1432 of the mounting groove 143.

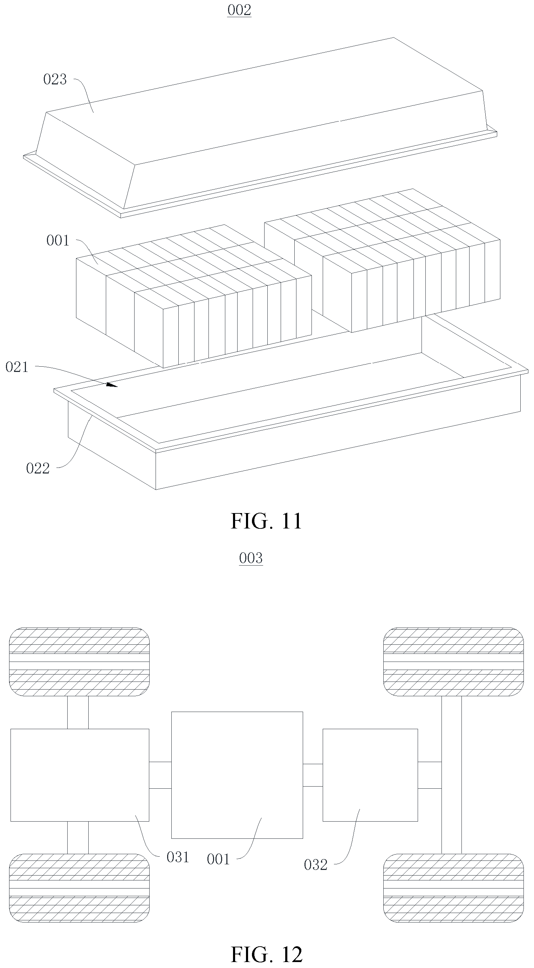

Referring to FIG. 11, FIG. 11 is a schematic view of a structure of a battery module 002 according to the embodiments of the invention. The embodiments of the invention provide a battery module 002. The battery module 002 includes a plurality of batteries. The plurality of batteries are connected in series and/or in parallel. At least one of the batteries is the aforementioned battery 001.

The plurality of batteries may be connected in series. Alternatively, the plurality of batteries may be connected in parallel. Alternatively, some of the plurality of batteries may be connected in series and some of the plurality of batteries may be connected in parallel.

It may be understood that the battery module 002 may further include a battery box. The battery box includes a mounting cavity 021. The plurality of batteries 001 are arranged inside the mounting cavity 021. The box cover 023 and the box body 022 are covered to define the mounting cavity 021.

In other embodiments, the battery module 002 includes an end plate and a tie strap. Two end plates are provided. The plurality of batteries 001 are sequentially stacked between the two end plates. The end plates are connected to the battery 001 as a whole through the tie strap.

In this embodiment, by using the aforementioned batteries 001, the space utilization of the battery module 002 can be higher, and the energy density of the battery module 002 can be improved.

Referring to FIG. 12, FIG. 12 is a schematic view of a structure of an electrical device 003 according to the embodiments of the invention. The embodiments of the invention provide an electrical device 003. The electrical device 003 includes the aforementioned battery 001, and the battery 001 supplies power to the electrical device 003. Alternatively, the electrical device 003 includes the aforementioned battery module 002, and the battery module 002 supplies power to the electrical device 003.

It may be understood that the electrical device 003 includes, but is not limited to, an electric toy, an electric tool, a battery-powered vehicle, an automobile, a ship, a spacecraft, etc. The electric toy may include a fixed or mobile electric toy, such as a game console, an electric vehicle toy, an electric ship toy, and an electric airplane toy. The spacecraft may include an airplane, a rocket, a space shuttle, and a spacecraft. The automobile may be a fuel-powered automobile, a gas-powered automobile, and a new energy automobile.

In addition, when the electrical device 003 is an automobile, the electrical device 003 may further include a motor 031 and a controller. The motor 031 may charge the battery module 002, or the battery module 002 may drive the motor 031 to operate. Meanwhile, the battery module 002 supplies power to the controller.

In this embodiment, by using the aforementioned battery 001 or the battery module 002, when the electrical device 003 uses the battery having the same volume, the electrical device 003 can have the battery with higher energy density, thereby improving the battery life of the electrical device 003.

The technical solutions and the technical effects of the invention will be described in detail below by specific embodiments. The following embodiments are merely some of the embodiments of the invention and are not intended to specifically limit the invention.

This embodiment aims to investigate the influence of the change of the arrangement position of the tab 015 on the performance of the battery 001.

Test content of the embodiment is specifically described as follows:

I. Test-Related Description

The following test method is a DCR test, i.e., a direct current resistance test.

The equipment used for the test is a Chroma lithium-ion battery test system with the model being: 17040E.

The test ambient temperature is 25±2 °C.

The main operation process of the test is as follows.

First, a nominal capacity is defined as 1C=55A, a standard charging and discharging capacity is defined as 1/3C (i.e., 18.3Ah), and a calibrated capacity C0 is defined as an average value of actual electrical capacities measured after three charging and discharging cycles.

C0 satisfies:

$$C0=(\sum In*Tn+\sum I'n*T'n)/6.$$

In the formula, n is a natural number, and $n \in (1, 3)$;

In is the nth charging current;

Tn is the nth charging time;

I'n is the nth discharging current; and

T'n is the n-th discharging time.

Then, the battery 001 is charged to 4.25V at a constant current and constant voltage of 1/3C with a cut-off current of 0.05C. Subsequently, the state of charge of the battery 001 is adjusted to 50%SOC at a discharging current of 1/3C0, and then the battery 001 stands for 1 hour.

Next, when the state of charge of the battery 001 is 50%SOC, the battery 001 is discharged at a constant current of 5C0 for 10 seconds, and a voltage change difference ($\delta U\_discharge$) and discharging current value (I_discharge) of the battery 001 before and after discharging are recorded. The charging DCR of the battery 001 is obtained when the state of charge of the battery 001 is 50%SOC according to the formula: DCR_discharge=$\delta U\_discharge$/I_discharge.

Meanwhile, when the state of charge of the battery 001 was 50%SOC, and the battery 001 is discharged at a constant current of 5C0 for 10 seconds, and a voltage change difference ($\delta U\_charge$) and a charging current value (I_charge) of the battery 001 before and after charging are recorded. The discharging DCR of the battery 001 is obtained when the state of charge of the battery 001 is 50%SOC according to the formula: DCR_charge=$\delta U\_charge$/I_charge.

II. Test Results

The test objects are square-casing batteries with dimensions of 148mm (length) ×91mm (width)×26.5mm (thickness). The difference between the test objects mainly lies in whether the tab 015 is located within the terminal 014. The test targets are the temperature at the center of the electrode assembly 013 of the battery 001 and the charging and discharging DCR of the battery 001.

2.1 Setting Control Group

The Control Group is a battery with the tab located outside the terminal in the related art. Test data is as follows:

[Table 1_sm_001]

Table 1. Structure and Verification Results of Control Group 1

| Group | Structure | Battery Capacity/Ah | Energy Density/ Wh/kg | @50%SOC Discharging DCR of Battery /mΩ | @50%SOC Charging DCR of Battery /mΩ | Temperature rise at the middle of the battery 001 when operating at 5C=280A for 15 minutes /°C |
|---|---|---|---|---|---|---|
| Control Group 1 | The tab 015 is located outside the terminal | 55 | 280 | 0.31±0.05 | 0.34±0.05 | 17 |

As can be seen from Table 1, the relevant data of the battery 001 with the tab 015 located outside the terminal 014 and dimensions of 148mm (length)×91mm (width)×26.5mm (thickness) are as follows:

(1) the battery capacity is 55 Ah;

(2) the energy density of the battery 001 is 280 Wh/kg;

(3) when the state of charge of the battery 001 is 50%SOC, the charging DCR of the battery is 0.34±0.05 mΩ, and the discharging DCR of the battery is 0.31±0.05; and

(4) after operating for 15 minutes with a charging and discharging current of 5C=280A, the temperature rise at the center of the electrode assembly (013) of the battery 001 is 17 °C.

2.2 On the premise that the external dimensions of the battery 001 are the same, the positive tab 151 is disposed in the mounting groove 143 of the positive terminal 141, the negative tab 152 is disposed in the mounting groove 143 of the negative terminal 142, and the electrode assembly 013 extends to the groove opening 1433 of the mounting groove 143, so that the positive plate is connected to the positive tab 151, and the negative plate is connected to the negative tab 152.
Based on the battery 001 with the above-described structure, test data are obtained as follows:

[Table 2_sm_002]

Table 2. Structure and Verification Results of Embodiment 1

| Group | Structure | Battery Capacity/Ah | Energy Density/ Wh/kg | @50%SOC Discharging DCR of Battery /mΩ | @50%SOC Charging DCR of Battery /mΩ | Temperature rise at the middle of the battery 001 when operating at 5C=280A for 15 minutes /°C |
|---|---|---|---|---|---|---|
| Embodiment 1 | The tab 015 is located inside the terminal 014. The electrode assembly 013 extends to the groove opening 1433 of the mounting groove 143 and is connected to the tab 015 | 59 | 300 | 0.22±0.05 | 0.27±0.05 | 9 |

As can be seen from Table 2, the relevant data of the battery with the tab 015 located inside the terminal 014 and dimensions of 148mm (length)×91mm (width)×26.5mm (thickness) are as follows:

(1) the battery capacity was 59 Ah;

(2) the energy density of the battery 001 is 300 Wh/kg;

(3) when the state of charge of the battery 001 is 50%SOC, the charging DCR of the battery is 22±0.05 mΩ, and the discharging DCR of the battery is 27±0.05.

(4) after operating for 15 minutes with a charging and discharging current of 5C=280A, the temperature rise at the center of the electrode assembly 013 of the battery 001 is 9 °C.

Comparing Embodiment 1 with Control Group 1, it can be seen that in a case where the tab 015 is located inside the end 014, the electrode assembly 013 extends to the groove opening 1433 of the mounting groove 143 and connected with the tab 015, following changes can be obtained:

(1) the battery capacity is increased from 55 Ah to 59 Ah;

(2) the energy density of the battery 001 is increased from 280 Wh/kg to 300 Wh/kg;

(3) when the state of charge of the battery 001 is 50%SOC, the charging DCR of the battery is reduced from 0.34±0.05 mΩ to 0.22±0.05 mΩ, and the discharging DCR of the battery is reduced from 0.31±0.05 to 0.27±0.05; and

(4) after operating for 15 minutes with a charging and discharging current of 5C=280A, the temperature rise at the center of the electrode assembly 013 of the battery 001 is reduced from 17 °C to 9 °C.

As can be seen from the above, on the premise that the external dimensions of the battery 001 remain unchanged, the tab 015 is disposed inside the terminal 014, and the electrode assembly 013 extends to the groove opening 1433 of the mounting groove 143 and is connected to the tab 015, so that the battery capacity and the energy density of the battery 001 can be increased, the charging and discharging DCR of the battery can be reduced, and the temperature rise inside the battery 001 can be reduced.

**Claims**

1.  A battery (001), comprising:

    a casing (011);
    a cover plate (012) covering the casing (011) to define an accommodating cavity (111);
    an electrode assembly (013) disposed inside the accommodating cavity (111); and
    one or more terminals (014) disposed on the cover plate (012) and protruding over a side of the cover plate (012) away from the accommodating cavity (111), wherein a side of the terminal (014) close to the accommodating cavity (111) is provided with a mounting groove (143), and the mounting groove (143) is communicated with the accommodating cavity (111); and
    tabs (015) each disposed in the mounting groove (143) and electrically connected to an inner wall (1432) of the mounting groove (143);
    wherein the electrode assembly (013) extends to a groove opening (1433) of the mounting groove (143) and is connected to the tabs (015).

2.  The battery (001) according to claim 1, wherein each of the tabs (015) comprises a plurality of layers, and the plurality of layers of each of the tabs (015) are stacked and bent to be arranged in the mounting groove (143).

3.  The battery (001) according to claim 2, wherein the plurality of layers of each of the tabs (015) are divided into two tab groups (153) along a stacking direction of each of the tabs (015), and the two tab groups (153) are respectively stacked and bent in the mounting groove (143).

4.  The battery (001) according to claim 3, wherein each of the two tab groups (153) comprises a bending portion (1531) and a planar portion (1533) connected in sequence, one end of the bending portion (1531) is connected to the electrode assembly (013), another end of the bending portion (1531) is connected to the planar portion (1533), and the planar portion (1533) is electrically connected to a groove bottom of the mounting groove (143); and
    wherein bending portions (1531) of the two tab groups (153) are bent toward each other.

5.  The battery (001) according to claim 4, wherein ends (1536) of the planar portions (1533) of the two tab groups (153) are opposite to and spaced apart from each other.

6.  The battery (001) according to claim 4 or 5, wherein in an arrangement direction of the two tab groups (153), the mounting groove (143) comprises a pair of first groove walls (1431) arranged opposite to each other, two sides away from each other of the two tab groups (153) are first surfaces (1534), and each of the first surfaces (1534) is at least partially attached to adjacent one of the first groove walls (1431).

7.  The battery (001) according to any one of claims 3 to 5, wherein along a width direction of the tabs (015), each of the tabs (015) is provided with a plurality of cutting openings (154), the plurality of cutting openings (154) in adjacent two of the plurality of layers of each of the tabs (015) are in one-to-one correspondence, and each of the two tab groups (153) is divided into a plurality of tab units (1535) arranged at intervals by the plurality of cutting openings (154).

8.  The battery (001) according to any one of claims 2 to 5, wherein along a thickness direction of the tabs (015), the plurality of layers of each of the tabs (015) stacked and bent are in interference fit with the mounting groove (143).

9.  The battery (001) according to any one of claims 1 to 5, wherein the battery (001) is a square-casing battery (001), and along a width direction of the cover plate (012), the cover plate (012) has a width dimension W1, and the terminal (014) has a width dimension W2, satisfying: 50%W1≤W2≤W1-2 mm.

10. The battery (001) according to any one of claims 1 to 5, wherein the battery (001) is a square-casing battery (001), and along a width direction of the cover plate (012), the inner wall (1432) of the mounting groove (143) has a thickness dimension D, satisfying: 0.5 mm≤D≤4 mm.

11. The battery (001) according to any one of claims 1 to 5, wherein each of the tabs (015) is in clearance fit with the mounting groove (143) along a width direction of the tabs (015).

12. The battery (001) according to claim 11, wherein along the width direction of the tabs (015), each of the tabs (015) has a width dimension W4, and the mounting groove (143) has a first dimension W5, satisfying: 50%W5≤W4≤W5-4 mm;

and wherein in the width direction of the tabs (015), spacings between two ends of each of the tabs (015) and the adjacent inner wall (1432) of the mounting groove (143) are consistent.

13. The battery (001) according to any one of claims 1 to 5, wherein the battery (001) is a square-casing battery (001); and wherein along a width direction of the tabs (015), the cover plate (012) has a length dimension L1, and the terminal (014) has a second dimension L2, satisfying: $10\%L1 \leq L2 < 50\%L1$.

14. The battery (001) according to any one of claims 1 to 5, wherein the terminal (014) is a rectangular column, and an axis of the terminal (014) is perpendicular to the cover plate (012).

15. The battery (001) according to any one of claims 1 to 5, wherein the terminals (014) comprise a positive terminal (141) and a negative terminal (142), and at least one of the positive terminal (141) and the negative terminal (142) is insulated and isolated from the cover plate (012); and wherein the tabs (015) comprise a positive tab (151) and a negative tab (152), the positive tab (151) is disposed in the mounting groove (143) of the positive terminal (141), and the negative tab (152) is disposed in the mounting groove (143) of the negative terminal (142).

16. The battery (001) according to any one of claims 1 to 5, wherein the electrode assembly (013) is insulatively attached to or insulatively abutted against the cover plate (012).

17. The battery (001) according to any one of claims 1 to 5, wherein the cover plate (012) is provided with a through-hole (121), one end of the through-hole (121) is communicated with the accommodating cavity (111), and a part of the terminal (014) is inserted through the through-hole (121).

18. The battery (001) according to any one of claims 1 to 5, wherein the cover plate (012) is provided with a through-hole (121), one end of the through-hole (121) is communicated with the accommodating cavity (111), and the terminal (014) is disposed on a side of the through-hole (121) away from the accommodating cavity (111).

19. The battery (001) according to any one of claims 1 to 5, wherein the battery (001) further comprises an insulation member (016), and the terminal (014) is insulated and isolated from the cover plate (012) by the insulation member (016).

20. The battery (001) according to claim 19, wherein an end of the insulation member (016) close to the accommodating cavity (111) is flush with a surface of the cover plate (012) facing the accommodating cavity (111).

21. The battery (001) according to any one of claims 1 to 5, wherein the cover plate (012) is welded or integrally formed with the casing (011).

22. The battery (001) according to any one of claims 1 to 5, wherein at least a part of the inner wall (1432) of the mounting groove (143) is attached to one of the tabs (015).

23. The battery (001) according to any one of claims 1 to 5, wherein the battery (001) is selected from one of a square-casing battery, a cylindrical battery, a prismatic battery, a special-shaped casing battery, and a button battery.

24. A battery module (002), comprising:
a plurality of batteries (001), wherein the plurality of batteries (001) are connected in series and/or in parallel, and at least one of the plurality of batteries (001) is the battery (001) according to any one of claims 1 to 23.

25. An electrical device (003), comprising the battery (001) according to any one of claims 1 to 23, wherein the battery (001) supplies power to the electrical device (003); or
the battery module (002) according to claim 24, wherein the battery module (002) supplies power to the electrical device (003).

width direction of tab

FIG. 1

width direction of tab

FIG. 2

001

direction perpendicular to the tab before bending

FIG. 3

001

direction perpendicular to the tab before bending

FIG. 4

001

direction perpendicular to the tab before bending

FIG. 5

B

FIG. 6

width direction of tab

FIG. 7

<u>C</u>

width direction of tab

FIG. 8

001

direction perpendicular to the tab before bending

FIG. 9

001

width direction of tab

FIG. 10

002

FIG. 11

003

FIG. 12

## INTERNATIONAL SEARCH REPORT

| International application No. |
| --- |
| **PCT/CN2025/078028** |

### A. CLASSIFICATION OF SUBJECT MATTER

H01M50/553(2021.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNTXT, ENTXT, WPABS, DWPI, CNKI: 电池, 电芯, 端子, 极柱, 极耳, 凹, 槽, 容纳, 中空, battery, Terminal, pole, tab, groove, contain, hollow

### C. DOCUMENTS CONSIDERED TO BE RELEVANT

| Category* | Citation of document, with indication, where appropriate, of the relevant passages | Relevant to claim No. |
| --- | --- | --- |
| X | CN 217114714 U (SANY TECHNOLOGY EQUIPMENT CO., LTD.) 02 August 2022 (2022-08-02) <br> description, paragraphs 34-61, and figures 1-10 | 1-25 |
| X | CN 107204408 A (LINZHOU LANGKUN TECHNOLOGY CO., LTD.) 26 September 2017 (2017-09-26) <br> description, paragraphs 19-33, and figures 1-7 | 1-25 |
| X | CN 117638195 A (JINGKE ENERGY STORAGE TECHNOLOGY CO., LTD.) 01 March 2024 (2024-03-01) <br> description, paragraphs 38-64, and figures 1-5 | 1-25 |
| X | CN 220086323 U (JIANGSU ZENERGY BATTERY TECHNOLOGIES GROUP CO., LTD.) 24 November 2023 (2023-11-24) <br> description, paragraphs 34-63, and figures 1-6 | 1-25 |
| PX | CN 118630432 A (EVE ENERGY CO., LTD.) 10 September 2024 (2024-09-10) <br> claims 1-25 | 1-25 |

☑ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **04 June 2025** | **10 June 2025** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2025/078028** |

**C.  DOCUMENTS CONSIDERED TO BE RELEVANT**

| Category* | Citation of document, with indication, where appropriate, of the relevant passages | Relevant to claim No. |
| --- | --- | --- |
| E | CN 119726008 A (JIANGSU ZENERGY BATTERY TECHNOLOGIES GROUP CO., LTD.) 28 March 2025 (2025-03-28)<br>        description, paragraphs 45-100, and figures 1-9 | 1, 15-19, 22, 23 |
| E | CN 222654279 U (XINGHENG POWER SUPPLY (CHUZHOU) CO., LTD.) 21 March 2025 (2025-03-21)<br>        description, paragraphs 42-85, and figures 1-15 | 1, 14-19, 21-25 |
| A | CN 217983604 U (BEIJING WELION NEW ENERGY TECHNOLOGY CO., LTD.) 06 December 2022 (2022-12-06)<br>        entire document | 1-25 |

Form PCT/ISA/210 (second sheet) (July 2022)

**INTERNATIONAL SEARCH REPORT**
Information on patent family members

International application No.

**PCT/CN2025/078028**

| Patent document<br>cited in search report | | | Publication date<br>(day/month/year) | Patent family member(s) | Publication date<br>(day/month/year) |
|---|---|---|---|---|---|
| CN | 217114714 | U | 02 August 2022 | None | |
| CN | 107204408 | A | 26 September 2017 | None | |
| CN | 117638195 | A | 01 March 2024 | None | |
| CN | 220086323 | U | 24 November 2023 | None | |
| CN | 118630432 | A | 10 September 2024 | None | |
| CN | 119726008 | A | 28 March 2025 | None | |
| CN | 222654279 | U | 21 March 2025 | None | |
| CN | 217983604 | U | 06 December 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410820196